# EUROPÄISCHE PATENTANMELDUNG

(11) **EP 0 563 427 A1**
(43) Veröffentlichungstag der Anmeldung: **06.10.1993**
(21) Anmeldenummer: 92105702.2
(22) Anmeldetag: 02.04.1992
(51) Int. Cl.: E05C 19/14, B62D 33/02

(54) **Riegelverschluss in einer seitlichen Einfassung für Bordwände von Nutzfahrzeugen**

(71) Anmelder: F. HESTERBERG & SÖHNE GmbH & Co. KG, D-58256 Ennepetal (DE)
(72) Erfinder: Nieland, Friedhelm, W-5805 Breckerfeld (DE); Feinbier, Joachim, W-5828 Ennepetal 15 (DE)
(74) Vertreter: Kneissl, Richard, Dr.

(57) **Zusammenfassung**

Die Erfindung betrifft eine Weiterbildung eines bekannten Riegelverschlusses in einer seitlichen Einfassung für Bordwände von Nutzfahrzeugen. Bei dem bekannten Verschluß ist der Riegel in einem kastenförmigen Teil des Einfassungsprofils 1 geführt. Für die Handhabe muß in den kastenförmigen Teil 3 eine Ausnehmung eingefräst werden. Neu an der Weiterbildung ist, daß sich die Ausnehmung über die gesamte Länge des Einfassungsprofils 1 erstreckt. Da hierdurch das Einfassungsprofil 1 geschwächt wird, ist der Riegel mittels einer Schwalbenschwanzführung 12 an der der Bordwand benachbarten Seite des kastenförmigen Teils 3 geführt.

## Beschreibung

Die Erfindung bezieht sich auf einen Riegelverschluß gemäß dem Oberbegriff des vorstehenden Anspruchs 1.

Riegelverschlüsse dieser Art sind beispielsweise aus dem DE-GM 84 06 793 und der EP-PS 302 270 bekannt. Um den gesamten Riegelmechanismus im Einfassungsprofil einbauen zu können, muß in den kastenförmigen Teil des Profils eine längliche Ausnehmung eingefräst werden, in welcher die Handhabe untergebracht wird. Außerdem muß eine Bohrung im Profil angebracht werden, durch die die Achse zur Anlenkung der Handhabe hindurchgeführt wird. Zum Zusammenbau des Verschlusses wird dann der Riegelteil mit dem einen Kniehebelglied von oben her in das Profil eingeführt und mit der Handhabe mittels einer Achse verbunden.

Diese Art des Zusammenbaus ist verhältnismäßig aufwendig und kostspielig. Ein besonderes Problem ergibt sich dabei durch die Tatsache, daß die Fahrzeugaufbauhersteller die Einfassungsprofile und die Mechanik von verschiedenen Herstellern beziehen und selbst zusammenbauen, insbesondere deshalb, weil sie sich die Profile für die von ihnen verwendeten Bordwandhöhen selbst zuschneiden.

Der Erfindung lag die Aufgabe zugrunde, den eingangs näher bezeichneten Riegelverschluß so weiter zu bilden, daß der Zusammenbau wesentlich vereinfacht ist.

Die Lösung dieser Aufgabe ergibt sich aus dem kennzeichnenden Teil des vorstehenden Anspruchs 1.

Dadurch, daß sich die Ausnehmung des kastenförmigen Teils des Einfassungsprofils über dessen gesamte Länge erstreckt, ist es möglich, die Mechanik einschließlich der daran befestigten Handhabe in einem Stück vorzufertigen. So braucht beim Zusammenbau nur eine einzige Bohrung im Profil vorgesehen werden, die für die Aufnahme der Achse zur Anlenkung der Handhabe dient. Da jedoch durch das durchgehende Aufschneiden des kastenförmigen Teils des Rahmenprofils dessen Festigkeit leidet, wird zur Führung des Riegels eine Schwalbenschwanzführung vorgesehen, wobei die Führungselemente auf der der Bordwand benachbarten Seite des kastenförmigen Teils des Profils liegen, so daß der aufgeschnittene kastenförmige Teil nicht beansprucht wird, wenn ein seitlicher Druck auf den Riegel ausgeübt wird.

Unter dem Ausdruck "Schwalbenschwanzführung" ist hier jegliche Führung zu verstehen, die eine Längsbewegung des geführten Teils gestattet und deren Führungsorgane derart verzahnt sind, daß nur eine Längsverschiebung des geführten Teils möglich ist. Beispiele hierfür sind Führungen mit einer T-Nut oder mit einer Keilnut.

Die Erfindung wird nun anhand der beigefügten Zeichnungen näher erläutert.

In den Zeichnungen zeigen:
- Figur 1: das Einfassungsprofil des erfindungsgemäßen Verschlusses;
- Figur 2: die Mechanik des Verschlusses ohne Handhabe;
- Figur 3: das Profil von Figur 1 mit der darin befestigten Handhabe; und
- Figur 4: eine ähnliche Figur wie Figur 3, wobei jedoch die Anlenkung der Handhabe in anderer Art erfolgt ist.

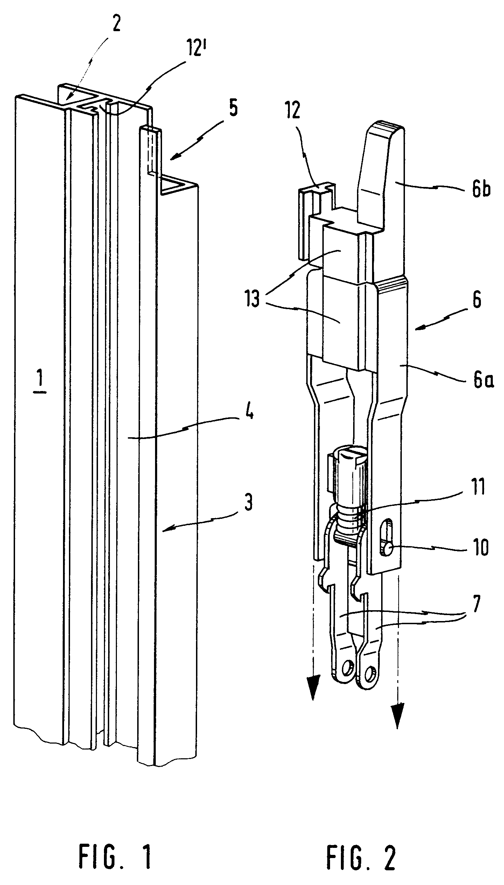

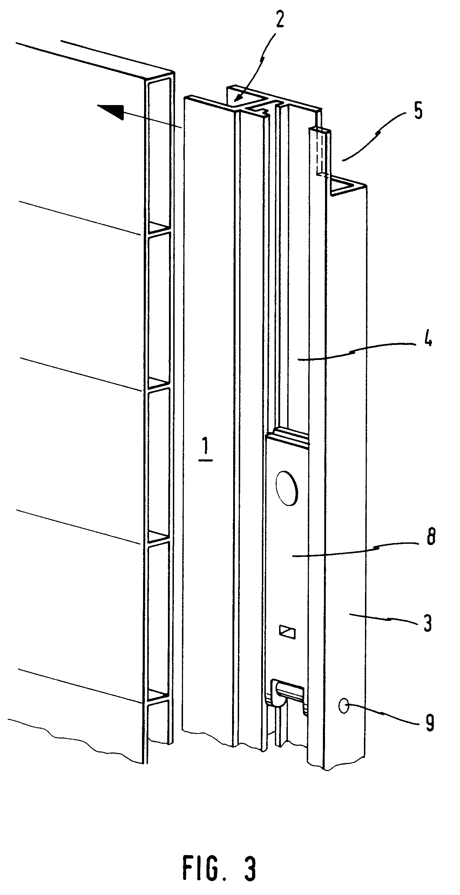

Gemäß den Figuren 1, 3 und 4 besitzt das Einfassungsprofil 1 des erfindungsgemäßen Verschlusses einen U-förmigen Teil 2, der für die Aufnahme der seitlichen Stirnseite einer Bordwand vorgesehen ist. Daran schließt sich ein kastenförmiger Teil 3 an, der auf einer Seite eine durchgehende Ausnehmung 4 besitzt.

Die Oberseite des Profils zeigt eine Ausfräsung 5, die zum Verriegeln der Bordwand gegen ein festes Aufbauteil, wie z. B. eine Runge erforderlich ist.

Gemäß Figur 2 besitzt die Mechanik einen Riegel 6, an dem ein Kniehebelglied 7 angelenkt ist, das seinerseits an einer Handhabe 8 in üblicher Weise angelenkt ist. Die Handhabe 8 ist ihrerseits mittels einer Achse 9 am Profil 1 angelenkt. Die Verbindung zwischen dem Kniehebelglied 7 und dem Riegel 6 erfolgt in bekannter Weise über eine Achse 10 und eine federnde Abstützung 11. Die federnde Abstützung sorgt einerseits dafür, daß der Riegel fest gegen den Gegenhalter am Gegenelement des festen Aufbauteils gedrückt wird, und andererseits dafür, daß die Handhabe in ihrer Übertotpunktlage in der Schließstellung festgehalten wird. Am Riegel 6 ist ein Schwalbenschwanzorgan 12 mit T-förmigem Querschnitt angeordnet, das in einer entsprechenden T-förmigen Nut 12' des Profils 1 gleitet.

Der Riegel 6 besteht in bekannter Weise aus einem bügelförmigen Teil 6a und einem daran befestigten Verschlußteil 6b (gemäß Anspruch 2).

Der Riegel ist seitlich mit einer Auswölbung 13 versehen (Figur 2), die in der Ausnehmung 4 gleitet und somit die Führung des Riegels 6 unterstützt (gemäß Anspruch 3).

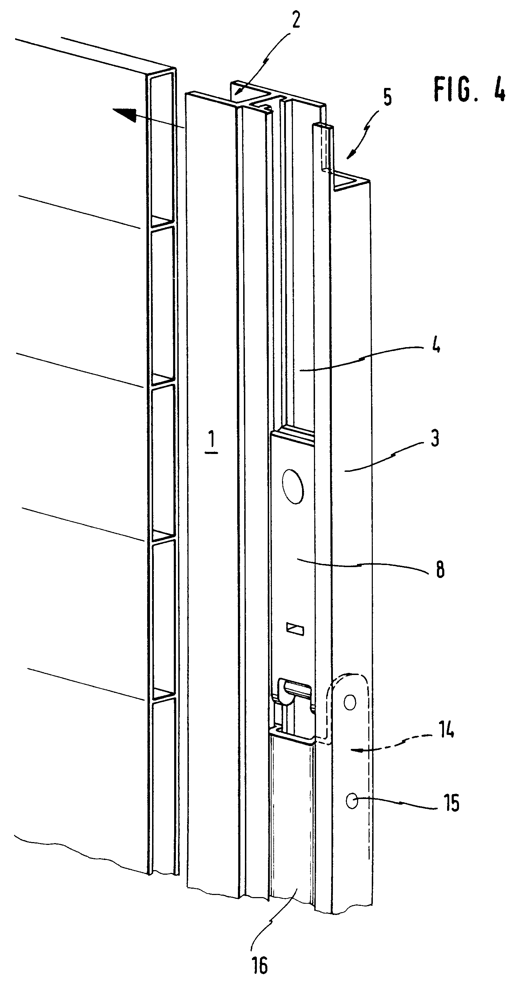

Bei der Ausführungsform von Figur 4 ist die Handhabe 8 nicht direkt am Profil 1 angelenkt, sondern an einem Einschubstück 14, das seinerseits mit einer Miete 15 mit dem Profil 1 verbunden ist (gemäß Anspruch 4). Der Vorteil dieser Ausführungsform liegt darin, daß es nicht nötig ist, ein mechanisches Teil, nämlich die Handhabe 8, am Profil 1 anzulenken, was ein genaues Arbeiten erfordert. Beim Zusammenbau eines Verschlusses dieser Ausführungsform ist es lediglich nötig, die gesamte Mechanik mit dem daran gefestigten Gleitstück 14 in den kastenförmigen Teil 3 des Profils einzuschieben, wobei die Befestigung innerhalb desselben mit einer einfachen Niete möglich ist, ein Vorgang, der keinerlei Präzision erfordert.

Das Einschubstück 14 besitzt ebenfalls eine Auswölbung 16 (gemäß Anspruch 5).

Es ist ersichtlich, daß durch die Auswölbung 13 am Riegel 6 und die Auswölbung 16 am Einschubstück 14 in Verbindung mit der Handhabe 8 die Ausnehmung 4 weitgehend verschlossen werden kann (gemäß Anspruch 6), so daß der erfindungsgemäße Verschluß im wesentlichen das gleiche Aussehen wie die eingangs näher beschriebenen Verschlüsse aufweist.

## Patentansprüche

1. Riegelverschluß in einer aus einem Profil (1) mit kastenförmigen Teil (3) bestehenden seitlichen Einfassung für Bordwände von Nutzfahrzeugen zum Verriegeln einer Bordwand gegen ein festes Aufbauteil des Fahrzeugs, wobei der Riegel (6) im kastenförmigen Teil (3) des Einfassungsprofils geführt ist und mit Hilfe eines einen Kniehebel (7,8) aufweisenden Antriebs in eine am festen Aufbauteil angebrachte Tasche einschiebbar ist, wobei weiterhin das vom Riegel entfernte Kniehebelglied über das Kniegelenk hinaus verlängert und dort als Handhabe (8) ausgebildet ist, die in ihrer Schließstellung in einer länglichen Ausnehmung (4) des kastenförmigen Teils (3) des Einfassungsprofils (1) liegt, und wobei außerdem in Schließstellung das Kniegelenk des Kniehebels (7,8) gegenüber den Anlenkpunkten desselben am Riegel und an der Einfassung sich in einer Übertotpunktlage befindet und durch ein Federelement (11) in dieser Lage gehalten wird, dadurch gekennzeichnet, daß sich die Ausnehmung (4) des kastenförmigen Teils (3) des Einfassungsprofils (1) über die gesamte Länge des Profils erstreckt und daß die Führung des Riegels aus einer Schwalbenschwanzführung (12,12') besteht, deren Führungselemente auf der der Bordwand benachbarten Seite des kastenförmigen Teils (3) des Einfassungsprofils (1) bzw. des Riegels (6) angeordnet sind.

2. Riegelverschluß nach Anspruch 1, dadurch gekennzeichnet, daß der Riegel (6) in dem an den Antrieb angrenzenden Teil als Bügel (6a) ausgebildet ist, der im kastenförmigen Teil (3) des Einfassungsprofils (1) geführt ist und von dessen Verbindungssteg der andere Teil (Verschlußteil 6b ) des Riegels absteht, an welchem Verschlußteil (6b) ein Führungselement (12') der Schwalbenschwanzführung (12,12') vorgesehen ist.

3. Riegelverschluß nach Anspruch 1 oder 2, dadurch gekennzeichnet, daß der Riegel (6) eine Auswölbung (13) aufweist, die in die Ausnehmung (4) des kastenförmigen Teils (3) des Einfassungsprofils (1) hineinragt.

4. Riegelverschluß nach einem der Ansprüche 1 bis 3, dadurch gekennzeichnet, daß die Handhabe (8) an einem Einschubstück (14) im kastenförmigen Teil (3) des Einfassungsprofils (1) angelenkt ist und das Einschubstück (14) im kastenförmigen Teil (3) befestigt ist.

5. Riegelverschluß nach Anspruch 4, dadurch gekennzeichnet, daß das Einschubstück (14) eine Auswölbung (16) aufweist, die in die Ausnehmung (4) des kastenförmigen Teils (3) des Einfassungsprofils (1) hineinragt.

6. Riegelverschluß nach Anspruch 3 und gegebenenfalls Anspruch 5, dadurch gekennzeichnet, daß die Handhabe (8), die Auswölbung (13) auf dem Riegel (6) und gegebenenfalls auch die Auswölbung (16) auf dem Einschubstück (14) mit der Außenoberfläche des Einfassungsprofils (1) fluchten und bis auf eine Grifföffnung oberhalb der Handhabe (8) im wesentlichen die gesamte Ausnehmung (4) des kastenförmigen Teils (3) des Einfassungsprofils (1) verschließen.
